# EUROPEAN PATENT APPLICATION

(11) **EP 4 273 717 A1**
(43) Date of publication of application: **08.11.2023**
(21) Application number: 23170860.3
(22) Date of filing: 28.04.2023
(51) Int. Cl.: G06F 16/9035, G06F 16/335

(54) **INTELLIGENT FILTER**

(30) Priority: 02.05.2022 GB 202206384
(71) Applicant: Selligence Technology Ltd, Cardiff CF10 2HE (GB)
(72) Inventor: ZOU, Ping, Cardiff (GB)
(74) Representative: Murgitroyd & Company

(57) **Abstract**

A method and system is provided. The method and system enable content to be filtered intelligently to remove content which is not likely to be of interest to a user.

## Description

### Field

The present invention relates to an intelligent filter and, in particular, to an intelligent filter for content published on the World Wide Web.

### Background

The prominence of the Internet, which is a global network of networks that provides a means of connecting a computer to any other computer anywhere in the world, and the World Wide Web, which is a collection of published content such as information and articles that are accessed via the Internet, over the past few decades has enabled a vast amount of content to be published by various sources for consumption by users.

Typically, over two million articles are published in over two hundred languages daily, covering a multitude of sectors, for example, business, news, sport, hobbies, and so on. Thus, there is a vast amount of content available to users making it difficult to easily locate content that is of relevance to any particular user, whether the user is a person or an entity such as a company.

Certain content, such as, for example, business news, business articles and other business content, on the World Wide Web may contain material which a user wants to view. However, a substantial amount of content contains material a user is not likely to want to view...

Currently, a user may attempt to locate published articles that are relevant to the user by utilising simple filters based on, for example, type of publisher, keywords, and/or sectors. However, such simple filters are not effective in identifying the material a user is likely to want to view within the vast amount of content that is published worldwide in a multitude of languages.

Thus, there is a need to provide a user with content they are likely to view. Accordingly, the present invention seeks to address, at least in part, the drawbacks and disadvantages described above.

Aspects and embodiments were conceived with the foregoing in mind

### Summary

Viewed from a first aspect, there is provided a computer-implemented method of identifying content. The content may be URLs containing information related to filter parameters provided by a user. The content may be sourced using a keyword which indicates a topic of interest to a user. The keyword may be input into a device which is communication with the processing resource. The method may be implemented by a processing resource. The processing resource may be hardware or software based. The processing resource may be implemented through the cloud. The method may comprise receiving one or more semantic context vectors, wherein the one or more semantic context vectors relate to published content. The method may further comprise applying an intelligent filter to the one or more semantic context vectors to determine an output value. The output value may be indicative of the likelihood the content matches one or more predefined filter parameters. The filter parameters may be provided by a user using a user device. The user device may be a computing device. The output value may be compared to a predetermined threshold. A notification may be transmitted to a user device if the output value exceeds the first predetermined threshold. The user device receiving the notification may be distinct from the user device where the filter parameters are provided. The notification identifies the content for which the output value exceeds the first predetermined threshold.

A method in accordance with the first aspect provides a filter which identifies content which is likely to match the filter parameters provided by a user. That is to say, the filter parameters can identify specific topics and the computer-implemented method provided by the first aspect provides a means by which content which is not likely to be viewed by the user is not provided to the user. A notification is provided to a user device which only identifies content which exceeds the first predetermined threshold and does not include content which does not exceed the first predetermined threshold. This means the user is aided in that they are only looking at content they are likely to want to see. The device used to receive the notification also preserves processing resources by not allocating substantial resources to the identification of content the user is unlikely to want to view. Additionally, in providing a filter which removes content the user is not likely to want to view, the claimed method reduces unnecessary interactions with a device which may take place when reading content which is of no interest to the user.

Accordingly, the present invention can advantageously filter published content e.g. published news, and provide only the content that is relevant or required by a user, such as an update about a particular subject, e.g. company or business, that is relevant to the user. The present invention also advantageously provides the technical means that removes the need and time for human manual time to search and review thousands, if not millions, of published content each day as the present invention is able to separate, or identify, relevant content from irrelevant content, for example, separate content which mentions a company from content which is specifically about a company that the user is interested in. For example, a leading consumer brand would have many mentions in content within the media, but there are very few articles providing an update about the company itself. In other words, the present invention advantageously filters the content, which merely mentions the company from the content that is providing an update about the company. This ability further advantageously permits a range of services to be provided, which would not previously have been possible, to provide relevant content to a user about a particular subject, e.g. company, from any publisher located anywhere in any language.

Furthermore, as there are millions of articles published daily in a plurality of languages then there is simply too much content to manually filter. Thus, the present invention advantageously provides methods and systems for filtering irrelevant content from content that is relevant to a user. Additionally, the semantic nature of the content extractor module and the implementation of the Intelligent Filter, with the capacity for continuous training, the present invention can be adjusted for topic shifts within the relevant field without having to scour through many uninteresting or irrelevant articles again.

The method may further comprise receiving one or more input descriptors, wherein each input descriptor identifies the published content and performing content extraction on the published content to determine the one or more semantic context vectors.

The method may further comprise performing content identification on one or more sources to identify the one or more input descriptors. The content identification is performed by one or more Miner processes which may be applied to one or more sources of content. Alternatively or additionally, the content identification may be performed using one or more artificial neural networks (ANNs).

Artificial neural networks (ANN), otherwise known as connectionist systems are computing systems vaguely inspired by the biological neural networks. Such systems "learn" tasks by considering examples, generally without task-specific programming. They do this without any a prior knowledge about the task or tasks, and instead, they evolve their own set of relevant characteristics from the learning/training material that they process. ANNs are considered nonlinear statistical data modeling tools where the complex relationships between inputs and outputs are modeled or patterns are found.

ANNs can be hardware - (neurons are represented by physical components) or software-based (computer models) and can use a variety of topologies and learning algorithms.

ANNs usually have three layers that are interconnected. The first layer consists of input neurons. Those neurons send data on to the second layer, referred to a hidden layer which implements a function and which in turn sends the output neurons to the third layer. There may be a plurality of hidden layers in the ANN. With respect to the number of neurons in the input layer, this parameter is based on training data.

The second or hidden layer in a neural network implements one or more functions. For example, the function or functions may each compute a linear transformation or a classification of the previous layer or compute logical functions. For instance, considering that the input vector can be represented as x, the hidden layer functions as h and the output as y, then the ANN may be understood as implementing a function f using the second or hidden layer that maps from x to h and another function g that maps from h to y. So the hidden layer's activation is f(x) and the output of the network is g(f(x))

Each input descriptor may be a Uniform Resource Locator (URL). The ANN may be trained to identify based on a URL whether a website, for instance, may contain content which may be of interest. The ANN may be trained using any suitable form or supervised or unsupervised learning.

The one or more predefined filter parameters may be received from a user device. The user device may be any computing device. The filter parameters may be provided by the user device using any suitable telecommunications functionality or even using an API call.

The first predetermined threshold may be based on a maximised Area Under Curve.

The content extraction may be based on a natural language processing model. The natural language processing model may include a Bidirectional Encoder Representations from Transformers (BERT) model. The use of this model advantageously removes any dependence on the content being drafted in a specific language. Further advantageously therefore, the Intelligent Filter model does not need to be concerned with, or take into account, how the content was written or which language the content is written in.

Alternatively or additionally, the content extraction is based on an ensembled model. The ensembled model may comprise a first model of a text classification model; and a second model of an industry classification model.

The method may comprise performing the content extraction on text of the published content to transform the text to the one or more semantic context vectors; wherein the one or more semantic context vectors include a numerical representation of a meaning of the text of the published content.

The intelligent filter is based on a Multilayer Perceptron. The multilayer perceptron may be implemented as a feedforward ANN. The Multilayer Perceptron may be formed of two or more perceptrons and comprises an input layer to receive the input semantic context vectors. one or more hidden layers to receive a set of weighted inputs and to determine the output value based on an activation function, and an output layer to predict the likelihood the content matches the one or more predefined filter parameters. This means that content can be provided without an individual user configuration being provided .

The method may further comprise multiplying each of the one or more semantic context vectors by the set of weights; and adding a bias.

The method may further comprise normalising the output of the intelligent filter.

The method may further comprise training the intelligent filter based on an initial training set, wherein the initial training set may comprise a plurality of input descriptors relating to published content, wherein at least a subset of the published content relating to the input descriptors are reviewed manually. The manual review may be conducted at any suitable frequency and may seek expert input regarding specific topics.

The method may further comprise training the intelligent filter based on the output value of the intelligent filter. The training may be implemented using supervised learning where content or characteristics of content are labelled as being likely to satisfy the first predetermined threshold or not likely to satisfy the first predetermined threshold.

The training of the model enables the computer-implemented method to compensates for drift.

There may also be provided computer readable executable code configured to implement any aspect or embodiment of the method.

Viewed from a second aspect, there is also provided a system comprising an intelligent filter module and a processor, wherein the processor is configured to implement any of the method features.

The system may further comprise a context extractor module and a content identifier module.

The system may further comprise a serverless environment, wherein the modules are executed on the serverless environment.

### Drawings

Embodiments will now be described, by way of example only, and with reference to the accompanying drawings, in which:
Figure 1 shows a block diagram according to one or more embodiments of the present invention.
Figure 2 shows a flow chart illustrating the flow of information according to one or more embodiments of the present invention.

### Description

Embodiments of the present invention will now be described with reference to the accompanying drawings. The following description is directed to filtering content to identify relevant company related content, however, as will be appreciated, the present invention may be utilised in other contexts that a user may be interested in identifying relevant content, such as sport, hobbies, government organisations, and so on.

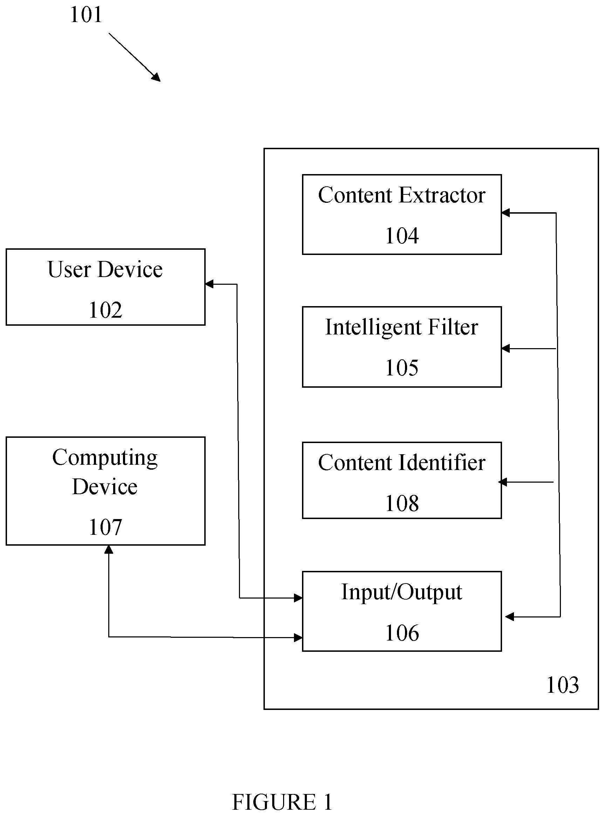

With reference to Figure 1, the system 101 may include a number of devices and modules that are operatively interconnected using any suitable telecommunications network. For example, they could be connected using any one or more of data busses, wireless networking, the worldwide web, blue-tooth or near-field communication. The system 101 may be configured to communicate with a user device 102 which is operatively connected to an input/output module 106 of a serverless environment 103. The connection between the user device 102 and the input/output module 106 of the serverless environment 103 may be implemented using any suitable telecommunications network. The user device may be any computing device comprising processing resources and a suitably configured transmitter/receiver or modem. The user device 102 enables a user to input any filter parameters relating to the content that the user requires. The user device 102 may provide a user interface to the user which enables the user to input the filter parameter relating to the content the user requires. The filter parameters may also be transmitted to the serverless environment using a suitable application programming interface (API) call. The serverless environment 103 may comprise a content identifier module 108, a content extractor module 104, and an Intelligent Filter module 105, wherein the modules may be implemented as applications within the serverless environment. The content identifier module 108, content extractor module 104 and intelligent filter module 105 may be implemented in separate serverless environments. The content identifier module 108, content extractor module 104 and intelligent filter module 105 may be configured to exchange data with one another as the functionality of the system 101 requires.

The serverless environment 103 enables applications to be built and executed without managing any server infrastructure, that is the applications can be considered to be abstracted from the physical servers which may be present in the serverless environment 103. The serverless environment may be implemented using cloud-based services. For example, the serverless environment may be based on the Amazon Web Services (AWS) serverless environment, which may include a combination of SQS (Simple Queue Service), Lambda and SNS (Simple Notification Service), along with MongoDB and S3 for storage of documents. Other cloud computing execution models may be adopted to provide the functionality of the serverless environment 103.

However, as will be appreciated, the present invention may alternatively be based on a more traditional server approach. A more traditional server environment may be implemented either using hardware or using a virtual server environment.

A computing device 107 may be operatively coupled to the input/output module 106 of the serverless environment 103, to enable a manual review of the output of the Intelligent Filter module 105 and to provide training sets for the Intelligent Filter module 105. The computing device 107 may comprise a network of computers including one or more of desktop computers, laptop computers or mobile computing devices. Each computer operative to provide a user interface to a user to provide training sets for the intelligent filter module 105.

The content identifier module 108, may perform content identification to identify or collect input descriptors, e.g. Uniform Resource Locators (URLs), for processing from a number of potential sources, wherein the sources may include one or more of Really Simple Syndication (RSS) feeds, social media posts, web crawling, subscribed feeds, and so on. This may be implemented using suitable APIs which are configured to enable the content identifier module 108 to retrieve the input descriptors from the respective source.

The content identifier module 108 may be implemented as one or more Miner processes, wherein each of the one or more Miner processes may operate on, or be specific to, one or more of the potential sources. Alternatively, one Miner process may operate on each of the potential sources. The one or more Miner processes may run periodically, for example, once every 15 minutes. However, as will be appreciated the Miner process may be performed at any suitable time period. The Miner processes of the content identifier module 108 may be based on, for example, AWS Lambda.

The content identifier module 108 may alternatively be implemented by a suitably configured artificial neural network (ANN).

The ANN may be trained based on the general structure of URLs and how they are used to represent the content therein. This may be implemented using supervised learning which maps example input to output pairs. For example, the ANN may be configured to map the filter parameter "Tesla" to suitable outputs such as www.tesla.com which could then be identified as a URL.

The content extractor module 104 may then perform content extraction on the identified URLs, wherein the content extractor module 104 may be based on a natural language processing model for extracting semantic context from the content.

The extracted content may subsequently be passed into the Intelligent Filter module 105 for filtering, wherein the Intelligent Filter module 105 may be based on a trained multilayer perceptron (MLP) which may be understood as a feedforward ANN comprising an input layer, an output layer and at least one hidden layer. The Intelligent Filter module 105 may operate on an AWS Lambda, and those URLs marked as interesting by the Intelligent Filter module 105 based on the extracted content may then be saved into, or recorded in, a MongoDB database along with an associated interesting score assigned to the URL by the Intelligent Filter module 105.

The operation performs a specific function such that advantageously individual user configuration is not needed, or required.

An AWS SQS service may be utilised to pass the URLs to the content extractor module 104 and/or to pass the URLs and the extracted content to the Intelligent Filter for filtering.

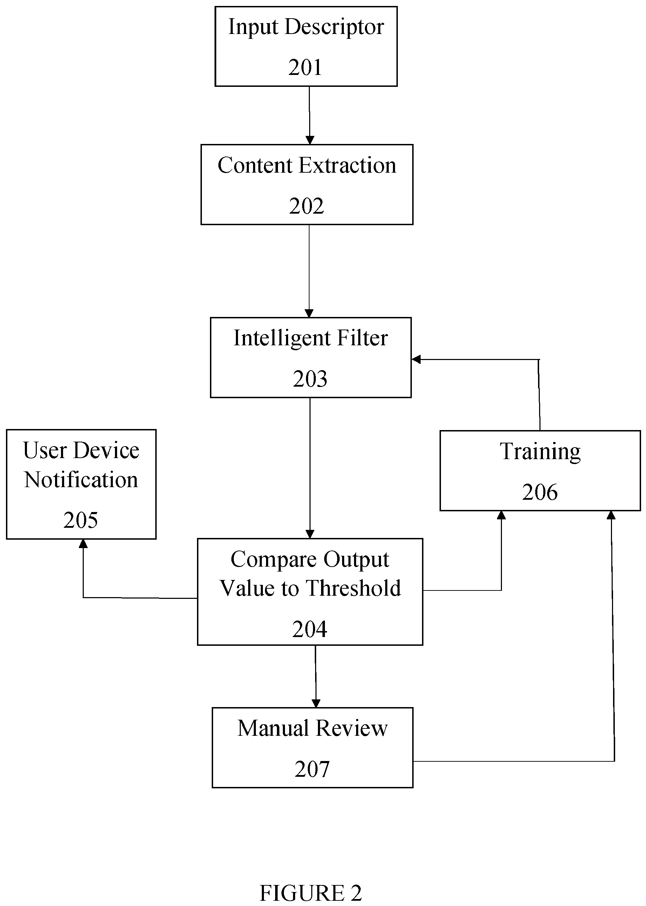

We now describe how the system 101 identifies content which is of interest to a user, with reference to Figure 2. The process described in Figure 2 may be implemented using any processing resource.

With reference to Figure 2, the process receives 201 one or more input descriptors, wherein the input descriptors identify content published on the World Wide Web. The input descriptor may be a Uniform Resource Locator (URL) obtained from one or more potential sources, for example, a Really Simple Syndication (RSS) feed, URLs contained in social media posts, URLs from a web crawl, and so on. The URLs may be identified using the content identifier module 108 as described above and provided to the content extractor module 104. Alternatively, the URLs may be provided directly by user device 102 in an API call and/or through a user interface provided on the user device 102

For each input descriptor, the content extractor module 104 performs content extraction 202. The content extractor module 104 may include, for example, a natural language processing module that is configured to extract semantic context from the content. The natural language processing module may include any suitable natural language processing model for extracting semantic context from the content, for example, the natural language processing module may include a Bidirectional Encoder Representations from Transformers (BERT).

BERT is a transformer-based machine learning technique for natural language processing (NLP) pre-training. A BERT based multi-lingual uncased language model may be used to extract representations of the contents in the form of a high dimensional vector. BERT multilingual may be used as a content extractor in order to allow the process to operate in the languages supported by BERT multi-lingual.

Thus, the BERT is used to extract 202 semantic context vectors from published content, such as articles, which may be performed in multiple languages. The BERT model may be able to determine that similar phrases within content have similar meaning which can be extracted into semantic context vectors, for example, the phrase "walking down the street" is of similar context to the phrase "strolling down the road". The use of the BERT advantageously provides consistent semantic context vectors irrespective of language.

BERT-base-multilingual is a transformers-based language model that includes a plurality of layers, typically 12 layers in a conventional BERT, and a plurality of hidden nodes per layer, typically 768 hidden nodes per layer in a conventional BERT. The original model may be trained on a large corpus using a next sentence prediction task. In this task, the model learns whether the next sentence is probable given the current sentence. This training enables BERT to learn semantic context vectors. Other transformers based language models may also be used.

The present invention adds an additional layer to the 12 layers, which is arranged, or implemented, as a last layer of the model. The additional last layer may be considered to be the Intelligent Filter module 203, which will be described in more detail below in addition to the description of intelligent filter module 105 provided previously. However, as will be appreciated the Intelligent Filter module may alternatively be implemented as a separate model to the BERT model.

The last additional layer may be a sequence classification head as an affine transformation layer, such as an MLP, which receives the pooled output of BERT. That is to say, the last additional layer may be provided as an MLP which implements a feedforward ANN as described below. This last layer of the model learns or predicts whether the content is interesting or not. In order to normalise the output of this last layer, then during the prediction as to whether the content is interesting or not, a Softmax function may be used, to scale the values for the 0 (not interesting) class and the 1 (interesting) class to add up to 1.0. An Adam style gradient descent optimisation may also be used. Training uses 3 epochs with a learning rate of 2E-6.

In the above examples, the content extractor module is based on a BERT transformer, however, as will be appreciated other possible transformers may alternatively be used, for example, GPT-2 GPT-3, DistilBERT, Roberta, and XLM. The BERT may further be modified and fine-tuned in order to improve the performance. For example, a hyperparameter may be adjusted. The standard BERT model may be trained on data specific to its use, which leads to changes in the model's parameters. BERT is used to provide the structure to obtain initialised parameters.

Accordingly, BERT performs the operation of transforming the text of the content into semantic context vectors such that phrases in different languages and phrases in the same language, but of the same meaning, produce a consistent single set of semantic context vectors. As such the input to BERT is text, which is extracted from the URL provided to the content extractor module 104 by the content identifier module 108, and the outputs of BERT are semantic context vectors that comprise numbers, in other words, each semantic context vector is a numerical representation of the meaning of the input text. That is to say, the content extractor module 104 uses the BERT module to generate semantic context vectors from the URLs provided to the content extractor module 104. Advantageously therefore, the Intelligent Filter model does not need to be concerned with, or take into account, how the content was written or which language the content is written in.

The semantic context vectors output by the content extractor module 104 may then be input to an Intelligent Filter module 203. As mentioned above, the Intelligent Filter module may be implemented as an additional last layer of the content extractor module 104 or as a separate model.

The intelligent filter may be applied to the one or more semantic context vectors in order to determine an output value, wherein the output value is indicative of the likelihood the content matches one or more predefined filter parameters.

The Intelligent Filter module 203 may include, or be based on, a trained multilayer perceptron (MLP). An MLP is typically a feedforward artificial neural network (ANN). A perceptron is a linear classifier that classifies the input by separating two categories with a straight line. The input vector is typically multiplied by weights and added to a bias in order to provide an output.

An MLP is typically formed of two or more perceptrons which include an input layer to receive the input semantic context vectors, one or more hidden layers to take in a set of weighted inputs and produce an output through an activation function, and an output layer that makes a decision or prediction on the input semantic context vectors.

The output of the MLP may include an output value which is a prediction that is indicative of the likelihood that the content being analysed is relevant to the user's requirements. For example, the output value may be a float value between 0 and 1, wherein an output value of 1 means the content being analysed is highly likely to be relevant to the user's requirements, whilst a value of 0 means the content being analysed is not likely to be relevant to the user's requirements. However, as will be appreciated the output value may be of any suitable range, e.g. 0 to 5, 0 to 10, 0 to 100, and so on, wherein the range is between "not likely to be relevant" through to "highly likely to be relevant" to the user's requirements, or *vice-versa.*

The output value is compared to a predetermined threshold 204 in order to determine, or predict, if the content is of relevance to the user. For example, if the range is 0 to 1 then a threshold may be predetermined as 0.5, wherein any output value for content that exceeds the predetermined threshold is determined to be of interest, or of relevance to, the user. The threshold may be predetermined by analysing articles and the output value to determine the optimal threshold. This may be part of a training process for the intelligent filter module 105 where expert knowledge is sourced to determine what would likely be of interest to a user. This is described in further described below.

The predetermined threshold may be used to indicate that content with an output value lower than the predetermined threshold is not relevant to the company, sector, or type of content that the user requires or that they have indicated as being of interest when they input filter parameters to the user device 102. For example, a user may be interested in only business news relating to the company of interest to the user and therefore the predetermined threshold provides an indication of whether the content is related to business news, rather than other types of content, such as general news, advertisements, and so on. However, the invention is not to be read as being limited to identifying business news.

The threshold may be predetermined based on a maximised Area Under Curve (AUC).

If the content relating to the input descriptor is considered to be highly likely to be relevant to the user's requirements, i.e., the related output value exceeds the predetermined threshold, then a notification is transmitted to the user device 102 of the user 205 providing one or more parameters relating to the content. For example, the notification may include one or more parameters of the input descriptor, e.g. URL, RSS Feed, and so on, the output value, or any other data that may be required by the user.

Accordingly, the present invention can advantageously filter published content e.g. published news, and provide only the content that is relevant or required by a user, such as an update about a particular subject, e.g. company or business, that is relevant to the user. The present invention also advantageously provides the technical means that removes the need and time for human manual time to search and review thousands, if not millions, of published content each day as the present invention is able to separate, or identify, relevant content from irrelevant content, for example, separate content which mentions a company from content which is specifically about a company that the user is interested in. For example, a leading consumer brand would have many mentions in content within the media, but there are very few articles providing an update about the company itself. In other words, the present invention advantageously filters the content, which merely mentions the company from the content that is providing an update about the company. This ability further advantageously permits a range of services to be provided, which would not previously have been possible, to provide relevant content to a user about a particular subject, e.g. company, from any publisher located anywhere in any language.

The Intelligent Filter may initially be trained using a training set. The training set may comprise a plurality of input descriptors, e.g. URLs, that relate to content, wherein at least a portion of the content related to the input descriptors are reviewed manually in order to provide a suitable training set for the Intelligent Filter. The training set may include a plurality of cases of a particular type of content to learn, for example at least 200 cases of a particular type of content to learn.

The initial update to the model may be assessed by a research team. The output from the research team may be used to further train the model until the new behaviour is learnt and the model is able to function autonomously without error. The Intelligent Filter output may be continually monitored by the research team, who grade the quality. The continual grading process ensures that that model stays current and adapts to changes in publishing style or to changes in language used and therefore prevents model drift where content which would once have been interesting and which is no longer of interest is identified as being of interest, i.e. generating an interesting score above the threshold

The output value of the Intelligent Filter module may further be utilised in training 206 the Intelligent Filter module. The greater likelihood of the content being relevant, that is an output value of the Intelligent Filter module indicates a high likelihood of relevance of the content, then more reliance can be placed on the determinations made from the text of the content by the content extractor module and/or by the Intelligent Filter module. Thus, the output values may be input to the Intelligent Filter module 203 in order to further train the Intelligent Filter.

One or more of the content being analysed by the Intelligent Filter and the output value may also be reviewed manually 207 to review the Intelligent Filter model accuracy and provide further training of the Intelligent Filter model.

The continuous training of the Intelligent Filter model, whether it be autonomously by feedback to the Intelligent Filter of the output value and/or from a manual review, enables the Intelligent Filter to handle, or compensate for, any drift that may occur when content varies due to changes in writing style, or due to the accepted meaning of any given word, or due to changing user requirements.

In the above embodiments and examples, the content extractor module was implemented using a BERT to determine one or more semantic context vectors for input to the Intelligent Filter, implemented using an MLP. Alternatively, the content extractor may be implemented using an ensembled model. An ensembled model is essentially a model that combines models together.

For example, a first model of the ensembled model may include a text classification model, wherein the text classification may be a type of NLP model, to identify whether the content relates to the type of news required by the user, e.g. the content relates to business news and market activities, and a second model of the ensembled model may include an industry classification model to identify whether the content covers the companies and/or industries required by the user.

By using a text classification model to classify text and combining this with a industry classification model to classify industries it may be possible to identify text which is applicable to industries.

The outputs of the two models may then be ensembled by concatenating them as the input of the Intelligent Filter module, e.g. an MLP, which determines the output value of the combination to make a prediction as to whether the content is relevant to the user.

The embodiments of the present invention have several important advantages over prior approaches in filtering the vast amount of content published on the World Wide Web in respect of a user's requirements. The present invention advantageously filters out content that is not interesting and irrelevant to a user's requirements or needs. The present invention can be applied to any sector and to any user requirements, for example, in relation to business news it is advantageous to be able to monitor media content within the financial markets sector by splitting or separating articles which generally mention a company within the article from actual business news articles relating to the company.

Furthermore, as there are millions of articles published daily in a plurality of languages then there is simply too much content to manually filter. Thus, the present invention advantageously provides methods and systems for filtering irrelevant content from content that is relevant to a user. Additionally, the semantic nature of the content extractor module and the implementation of the Intelligent Filter, with the ability for continuous training, the present invention can be adjusted for topic shifts within the relevant field without having to scour through many uninteresting or irrelevant articles again.

For example, the continuous training process enables the model to adapt to topic shifts as the research team grade at least a subset of the processed content which may identify certain changes including topic shift. The continual grading of automatically processed content enabales the model to learn about any changes to the input content.

The present invention can also reduce computer processing, by avoiding downstream processes for content that are not relevant business content for the user, which advantageously reduces costs spent on computer processing the vast amount of content.

In the foregoing embodiments, features described in relation to one embodiment may be combined, in any manner, with features of a different embodiment in order to provide efficient and effective Intelligent Filter. Note that, the above description is for illustration only and other embodiments and variations may be envisaged without departing from the scope of the invention as defined by the appended claims.

The claimed method may be stored on a non-transitory computer-readable storage medium.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of' and "comprising" means "including or consisting of". The singular reference of an element does not exclude the plural reference of such elements and vice-versa. The invention may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method of identifying content, the method implemented by a processing resource, the method comprising:
receiving one or more semantic context vectors, wherein the one or more semantic context vectors relate to published content;
applying an intelligent filter to the one or more semantic context vectors to determine an output value, wherein the output value is indicative of the likelihood the content matches one or more predefined filter parameters;
comparing the output value to a predetermined threshold; and
transmitting a notification to a user device if the output value exceeds the first predetermined threshold, wherein the notification identifies the content for which the output value exceeds the first predetermined threshold.

2. The method of claim 1, further comprising:
receiving one or more input descriptors, wherein each input descriptor identifies the published content; and
performing content extraction on the published content to determine the one or more semantic context vectors.

3. The method of claim 2, further comprising:
performing content identification on one or more sources to identify the one or more input descriptors, wherein the content identification is performed by one or more Miner processes.

4. The method of claim 2 or 3, in which each input descriptor is a Uniform Resource Locator (URL).

5. The method of any one of the preceding claims, further comprising:
receiving the one or more predefined filter parameters from a user device and/or in which the first predetermined threshold is based on a maximised Area Under Curve; and/or in which the content extraction is based on a natural language processing model; preferably wherein the natural language processing model includes a Bidirectional Encoder Representations from Transformers.

6. The method of any one of claims 1 to 5, in which the content extraction is based on an ensembled model.

7. The method of any one of claims 2 to 6, further comprising:
performing the content extraction on text of the published content to transform the text to the one or more semantic context vectors; wherein the one or more semantic context vectors include a numerical representation of a meaning of the text of the published content.

8. The method of any preceding claim, in which the intelligent filter is based on a Multilayer Perceptron.

9. The method of claim 8, in which the Multilayer Perceptron is formed of two or more perceptrons and comprises:
an input layer to receive the input semantic context vectors;
one or more hidden layers to receive a set of weighted inputs and to determine the output value based on an activation function; and
an output layer to predict the likelihood the content matches the one or more predefined filter parameters.

10. The method of any one of the preceding claims, further comprising:
normalising the output of the intelligent filter; and/or
training the intelligent filter based on an initial training set, wherein the initial training set comprises a plurality of input descriptors relating to published content, wherein at least a subset of the published content relating to the input descriptors are reviewed manually; and/or
training the intelligent filter based on the output value of the intelligent filter.

11. The method of claim 10, in which the training compensates for drift.

12. A computer program product comprising computer readable executable code configured to implement any one of method claims 1 to 11.

13. A system comprising:
an intelligent filter module; and
a processor, wherein the processor is configured to implement any one of method claims 1 to 12.

14. The system of claim 13, further comprising:
a context extractor module and a content identifier module.

15. The system of claim 13 or 14, in further comprising a serverless environment, wherein the modules are executed on the serverless environment.
